# EUROPÄISCHE PATENTSCHRIFT

(11) **EP 3 713 805 B1**
(45) Veröffentlichungstag und Bekanntmachung des Hinweises auf die Patenterteilung: **15.05.2024**
(21) Anmeldenummer: 19700547.3
(22) Anmeldetag: 03.01.2019
(51) Int. Cl.: B61C 9/48, B61C 9/50, B61D 17/02, H02K 9/197, B61F 3/14

(54) **DREHGESTELL EINES SCHIENENFAHRZEUGS**
BOGIE FOR A RAIL VEHICLE
BOGIE D'UN VÉHICULE FERROVIAIRE

(30) Priorität: 16.01.2018 EP 18151837
(43) Veröffentlichungstag der Anmeldung: 30.09.2020
(73) Patentinhaber: Siemens Mobility GmbH, 81739 München (DE); Siemens Mobility Austria GmbH, 1210 Wien (AT)
(72) Erfinder: ADAM, Christoph, 90411 Nürnberg (DE); KÖRNER, Olaf, 90469 Nürnberg (DE); KÜTER, Christian, 8046 Stattegg (AT); SCHAEFER-ENKELER, Andreas, 91341 Röttenbach (DE); SEITZ, Peter, 91224 Pommelsbrunn (DE); TEICHMANN, Martin, 8045 Graz (AT)
(74) Vertreter: Siemens Patent Attorneys
(86) Internationale Anmeldenummer: PCT/EP2019/050070
(87) Internationale Veröffentlichungsnummer: WO 2019/141518

(56) Entgegenhaltungen:
- EP-A1- 1 320 478
- EP-A1- 2 883 775
- WO-A1-2014/206643
- DE-A1-102011 012 454

## Beschreibung

Die Erfindung betrifft ein Drehgestell eines Schienenfahrzeugs mit zumindest einem Radsatz mit zwei gegenüberliegenden starr miteinander verbundenen Rädern, wobei eine Radsatzlagerung des Radsatzes innerhalb der beiden Räder erfolgt, wobei ein Fahrmotor zwischen den Rädern des Radsatzes angeordnet ist und diesen direkt antreibt, und wobei der Fahrmotor ein permanenterregter Synchronmotor mit Flüssigkeitskühlung ist.

Drehgestelle von Schienenfahrzeugen weisen Fahrmotoren auf, die als selbst- oder fremdbelüftete Asynchronmaschinen oder permanenterregte Synchronmaschinen ausgeführt sind, die über ein Getriebe die Radsätze der Drehgestelle antreiben. Die Getriebe werden durch den Fahrtwind, der im Unterflurbereich durchströmt, gekühlt. Eigenbelüftete Fahrmotoren saugen im Drehgestellbereich die Kühlluft an und geben sie dort auch wieder an die Umgebung ab. Fremdbelüftete Fahrmotoren geben ihre erwärmte Kühlluft auch im Drehgestellbereich an die Umgebung ab. Bei höherer Geschwindigkeit führt dann der Fahrtwind die aufgeheizte Kühlluft dieser Fahrmotoren im Drehgestellbereich ab.

Bei Schienenfahrzeugen im höheren Geschwindigkeitsbereich ist jedoch die Aerodynamik, insbesondere auch die des Drehgestellbereichs für den Energieverbrauch der Schienenfahrzeuge signifikant.

Deshalb werden, wie aus der WO 2014/206643 A1 und der WO 2010/086201 A1 bekannt, Verkleidungen für die Drehgestelle vorgesehen, um die Aerodynamik zu verbessern.

Dies ist aus aerodynamischen Gründen zwar vorteilhaft, es kann jedoch die Verlustwärme der Fahrmotoren schlecht oder gar nicht mehr abgegeben werden.

Aus EP 1 320 478 A1 ist ein permanenterregter Synchronmotor bekannt, der als Innenläufermotor ausgebildet ist und zwei auf einer Radsatzwelle befindliche Räder eines Radsatzes eines Fahrwerks antreibt. Ein Ständer des Innenläufermotors ist flüssigkeitsgekühlt, wofür in den Ecken eines einen quadratischen Querschnitt aufweisenden Gehäuses des Ständers axiale Kühlkanäle vorgesehen sind.

EP 2 883 775 A1 offenbart ein Drehgestell mit einem Fahrwerkrahmen, in dem eine Radsatzwelle eines Radsatzes gelagert ist. Ein Radsatzantrieb umgibt die Radsatzwelle konzentrisch und wirkt auf diese über ein Planetengetriebe und eine Zweiebenenkupplung. Die Kühlung des Radsatzantriebs kann als Wassermantelkühlung ausgebildet sein.

Des Weiteren sind bei Schienenfahrzeugen die Radsatzwellen außerhalb der Räder gelagert.

Ausgehend davon liegt der Erfindung die Aufgabe zugrunde, ein Drehgestell mit mindestens einem Fahrmotor für Schienenfahrzeuge, insbesondere für Hochgeschwindigkeitszüge, bereitzustellen, das auch bei einer Verkleidung des Drehgestells in der Lage ist, die Wärmeabfuhr des mindestens einen Fahrmotors zuzulassen.

Die Lösung der gestellten Aufgabe gelingt durch ein Drehgestell eines Schienenfahrzeugs mit:
- zumindest einem Radsatz mit zwei gegenüberliegenden starr miteinander verbundenen Rädern,
- einer Radsatzlagerung des Radsatzes innerhalb der beiden Räder,
- einem Fahrmotor, der den Radsatz direkt antreibt, wobei der Fahrmotor ein permanenterregter Synchronmotor mit Flüssigkeitskühlung ist,
- einer aerodynamischen Verkleidung des Drehgestells, wobei die Verkleidung als eine Vollverkleidung ausgestaltet ist, welche schalenförmige Verkleidungselemente an den Seiten, in den Fahrtrichtungen und an der Unterseite des Drehgestells aufweist, wobei die Verkleidung der Unterseite des Drehgestells Ausnehmungen für die Räder aufweist,
- wobei die Flüssigkeitskühlung als Flüssigkeitskühlmantel ausgeführt ist, und
- wobei der Fahrmotor einen geschlossenen Innenkühlkreislauf aufweist, der am Flüssigkeitsmantel rückkühlbar ist.

Erfindungsgemäß wird nun bei einem Drehgestell mit innengelagerter Radsatzwelle eine Vollverkleidung vorgesehen, die insbesondere von vorne betrachtet vergleichsweise schmal ausgeführt sein kann, da die außenliegende Lagerung der Radsatzwelle nach innen, also zwischen die Räder des Radsatzes verlegt wurde und somit mehr Raum und Teile für eine aerodynamische Verkleidung des Drehgestells zulässt.

Des Weiteren wird dadurch der gesamte Luftwiderstand des Schienenfahrzeugs reduziert, was dazu beiträgt, den Energieverbrauch des Fahrzeugs signifikant zu verringern. Als Fahrmotor eignen sich insbesondere Antriebsmotoren, die vergleichsweise effizient arbeiten und nur einer vergleichsweise geringen Kühlung bedürfen.

Erfindungsgemäß eignet sich deshalb ein flüssigkeitsgekühlter permanenterregter Synchronmotor ohne Getriebe in einem vollverkleideten innengelagerten Fahrwerk zur Lösung der oben gestellten Aufgabe.

Permanenterregte Synchronmaschinen eignen sich vergleichsweise gut für eine Flüssigkeitskühlung, da die abzuführenden Rotorverluste deutlich geringer sind als beispielsweise bei Asynchronmaschinen.

Des Weiteren wäre eine Entwärmung des Rotors durch eine Flüssigkeitskühlung u.a. aufgrund der rotierenden Dichtungen nur vergleichsweise technisch aufwändig zu realisieren.

Um auch die Wärmequelle eines Getriebes auszuschließen, wird erfindungsgemäß ein permanenterregter Synchronmotor als Direktantrieb eingesetzt, so dass eine Kühlung des Getriebes entfällt. Derartige Direktantriebe lassen sich sinnvollerweise mit permanenterregten Synchronmotoren realisieren, es sind aber auch Asynchronmotoren denkbar.

Der Direktantrieb ist dabei über eine Kupplung mit der Radsatzwelle gekoppelt. Der Direktantrieb ist entweder um die Radsatzwelle angeordnet, die Radsatzwelle greift also durch eine Hohlwelle eines Rotors des Direktantriebs. Dabei treibt der Direktantrieb mittels einer Kardanhohlwellenkupplung den Radsatz an.

Der Direktantrieb kann alternativ auch beispielsweise im Wesentlichen achsparallel neben der Radsatzwelle angeordnet sein.

Durch den Wegfall des Getriebes wird somit Bauvolumen innerhalb des innengelagerten Fahrwerks gewonnen und die zusätzliche Wärmelast durch das Getriebe vermieden.

Die Flüssigkeitskühlung des Fahrmotors ist im und/oder am Stator dieses Fahrmotors angeordnet. Dabei weist der Flüssigkeitskühlmantel Kühlschlangen in Umfangrichtung verlaufend oder achsparallel mäandernd auf. Des Weiteren können auch ergänzend oder alternativ im Blechpaket des Stators Kühlrohre angeordnet sein.

Über eine Flüssigkeitskühlung im oder am Statorgehäuse, insbesondere einen Wasserkühlmantel, der sich auf der Rückseite des Stators und zwischen Luftführungskanälen des Innenkühlkreislaufs des Fahrmotors befindet, können nunmehr auch aus dem nicht mit Außenluft durchströmten Fahrwerksbereich aufgrund der vergleichsweise dichten Verkleidung des Drehgestells der oder die Fahrmotoren ausreichend gekühlt werden.

Die durch das Wasser oder eine andere Kühlflüssigkeit aufgenommene Wärmemenge von Rotor und/oder Stator wird über eine Kühlanlage innerhalb des Schienenfahrzeugs und/oder über die Kühlanlage des Stromrichters an die Außenluft abgegeben.

Es liegt somit ein kompakter gekapselter Fahrmotor vor, wobei insbesondere durch eine Hochpoligkeit des Direktantriebs eine weitere Reduzierung des Durchmessers des Stators und axial kürzere Wickelköpfe erhalten werden.

Die Erfindung sowie vorteilhafte Ausgestaltungen der Erfindung werden anhand prinzipiell dargestellter Ausführungsbeispiele näher erläutert. Darin zeigen:
- FIG 1: einen prinzipiellen Fahrmotor,
- FIG 2: einen weiteren Fahrmotor,
- FIG 3: die Anordnung eines Fahrmotors auf einer Radsatzwelle,
- FIG 4, 5: Prinzipdarstellungen von Verkleidungen des Drehgestells und die Anordnung der Fahrmotoren.

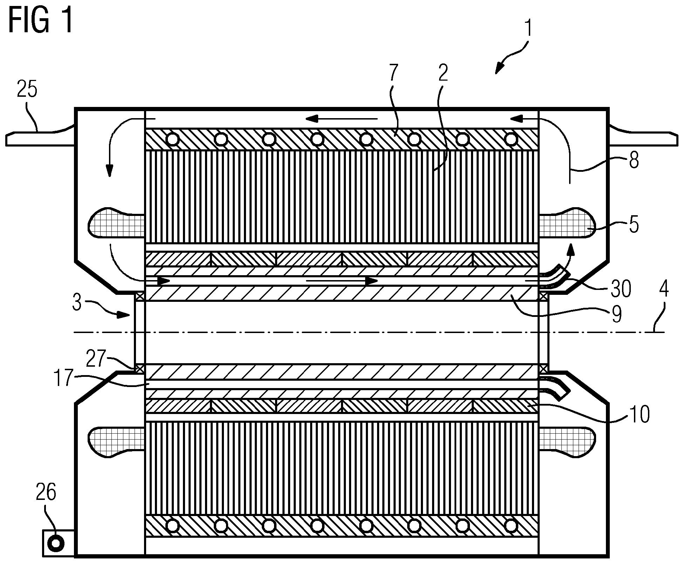

FIG 1 zeigt in prinzipieller Darstellung einen Längsschnitt eines permanenterregten Synchronmotors als Fahrmotor 1 eines nicht näher dargestellten Schienenfahrzeugs, insbesondere Hochgeschwindigkeitszuges mit einem in axialer Richtung geschichteten Blechpaket, das die Basis eines Stators 2 bildet. Auf der Rückseite des Stators 2, also der einem Luftspalt des Fahrmotors 1 abgewandten Seite des Stators 2 ist eine Wassermantelkühlung 7 angeordnet, um die Verlustwärme, die im Betrieb des Fahrmotors 1 anfällt aus dem Stator 2 abführen zu können. In diesem Fall verlaufen die Kühlrohre der Wassermantelkühlung 7 im Wesentlichen in Umfangrichtung.

In Nuten des Stators 2 ist ein Wicklungssystem angeordnet, das durch elektromagnetische Wechselwirkung mit einem Rotor 3, der mit Permanentmagneten 10 versehen ist, eine Drehung des Rotors 3 um eine Achse 4 bewirkt. Das Wicklungssystem bildet an den Stirnseiten des Stators 2 Wickelköpfe 5 aus. Die Permanentmagnete 10 des Rotors 3 sind als vergrabene Permanentmagnete 10 in im Wesentlichen axial verlaufenden Ausnehmungen des Rotors 3 oder als Oberflächenmagnete auf dem Rotor 3 angeordnet und dort beispielsweise durch eine Bandage fixiert. Der Rotor 3 bildet eine Hohlwelle 9 aus, durch den die Radsatzwelle 16 verläuft. Des Weiteren sind im Rotor 3 auch Kühlkanäle 17 für einen Innenkühlkreislauf 8 vorgesehen.

Der Innenkühlkreislauf 8 wird dabei durch Lüfter 30, insbesondere Radiallüfter aufrechterhalten. Der Rotor 3 verursacht vergleichsweise geringe Verluste, so dass auch ein Fahrmotor denkbar ist, der keinen Innenkühlkreislauf 8 aufweist, sondern lediglich durch eine Wassermantelkühlung 7 am Rücken des Stators 2 die Verluste aus dem Fahrmotor 1 abführt.

Der Innenkühlkreislauf 8 dient aufgrund der Führung des Luftstromes auch der Wärmeabfuhr aus den beiden stirnseitigen Wickelköpfen 5 des Stators 2 und zur Temperaturvergleichmäßigung innerhalb des Fahrmotors 1.

Die Wassermantelkühlung 7 bewirkt nunmehr eine Kühlung des Stators 2, und über den Innenkühlkreislauf 8 eine Kühlung des Rotors 3 und der stirnseitigen Wickelköpfe 5. Dies dient einer gleichmäßigen Temperaturverteilung innerhalb des Fahrmotors 1 und den Motorlagern 27.

Das Gehäuse der elektrischen Maschine 1 ist über Motorlager 27 am Rotor 3 abgestützt. Des Weiteren ist das Gehäuse über eine Drehmomentstütze 26 und eine Motorabstützung 25 im nicht näher dargestellten Drehgestell positioniert.

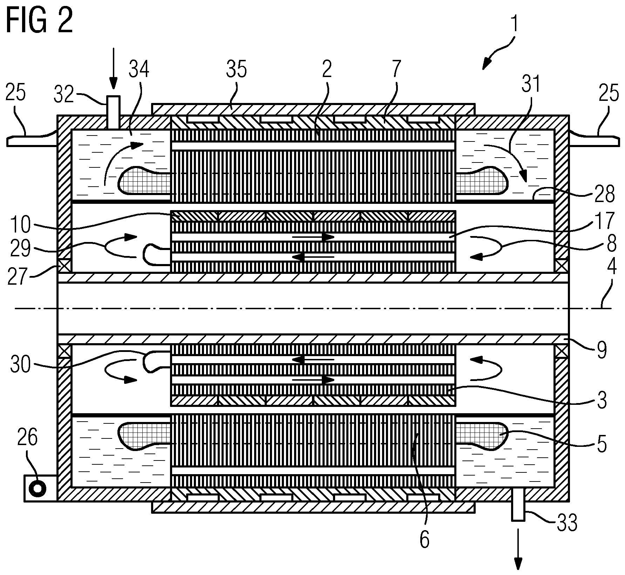

FIG 2 zeigt eine alternative Ausführung der elektrischen Maschine 1, die ebenfalls wie in FIG 1 als permanenterregter Synchronmotor ausgeführt ist. Der Flüssigkeitskühlmantel, der ebenfalls als Wasserkühlmantel 7 ausgeführt sein kann, ist hier im Wesentlichen aus zwei koaxial übereinander geschobenen Zylindern gebildet, wobei der radial innere Zylinder umlaufende Ausnehmungen aufweist, die das Wasser führen. Der Stator 2 ist durch ein Spaltrohr 28 vom Rotor 3 getrennt, so dass der Stator 2 zusätzlich durch ein isolierendes Kühlmittel 34, z.B. Öl über einen Einlass 32 und einen Auslass 33 gekühlt werden kann. Dabei verlaufen durch das Blechpaket des Stators 2 axiale Kühlkanäle.

Im Rotor 3 ist ein Innenkühlkreislauf 8, dessen Luftumwälzung durch einen Lüfter 30, insbesondere Radiallüfter aufrechterhalten wird. Eine Rückkühlung des Innenkühlkreislaufs 8 erfolgt im Kontakt mit den umliegenden Teilen, insbesondere auch an dem Spaltrohr 28.

Der Rotor 3 ist als Hohlwelle 9 ausgeführt und ist mit einer Kupplung 12 drehfest verbunden, die wiederum mit der Radsatzwelle 16 fest verbunden ist, so dass das Drehmoment des Fahrmotors 1 auf die Radsatzwelle 16 übertragbar ist. Es eignet sich dafür insbesondere eine Kardan-Hohlwellen-Kupplung.

Innerhalb des Rotors 3 können grundsätzlich Versteifungselemente vorgesehen sein, die den Rotor 3 in sich stabilisieren. Radsatzlager 15 innerhalb der Räder 11 gestatten eine Drehung der Radsatzwelle 16.

Das Gehäuse der elektrischen Maschine 1 ist über Motorlager 27 am Rotor 3 abgestützt. Des Weiteren ist das Gehäuse über eine Drehmomentstütze 26 und eine Motorabstützung 25 im nicht näher dargestellten Drehgestell positioniert.

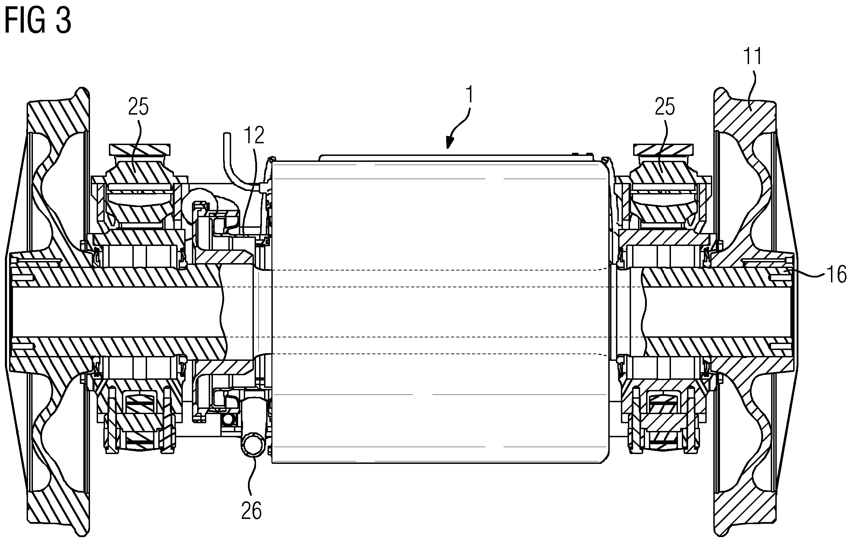

FIG 3 zeigt einen Radsatz 24 mit einem elektrischen Fahrmotor 1, der gemäß der FIG 1 oder der FIG 2 ausgeführt sein kann. Über eine Kupplung 12, insbesondere Kardan-Hohlwellen-Kupplung, wird das Antriebsmoment des Fahrmotors 1 zur Radsatzwelle 16 geleitet. Ebenso ist die Radsatzlagerung 15 zwischen den Rädern 11 angeordnet.

Somit ist der elektrische Fahrmotor 1 vollgekapselt und wirkungsvoll vor Feuchtigkeit und Verschmutzung geschützt.

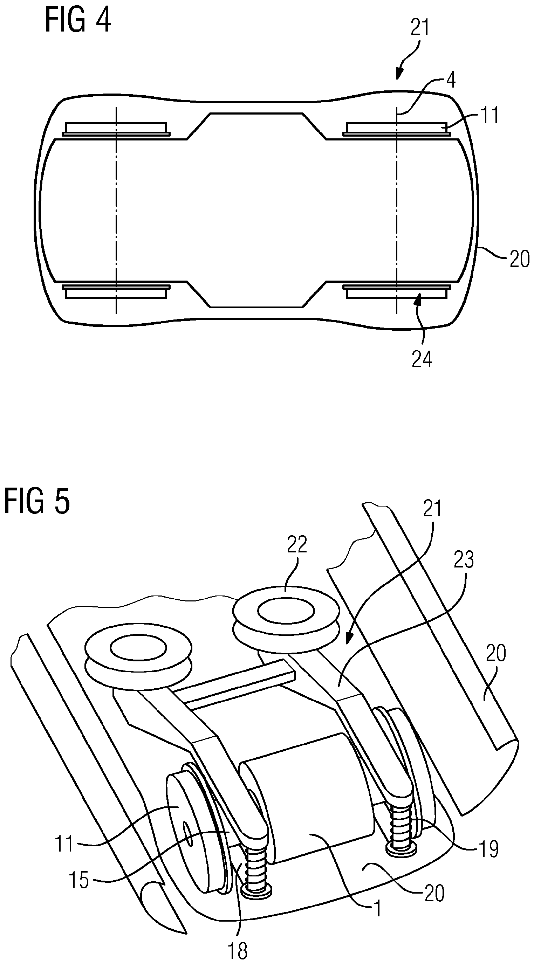

FIG 4 zeigt in prinzipieller Darstellung ein Drehgestell 21, dessen Radsätze 24 mit den jeweiligen Rädern 11, die um die Achsen 4 drehbar sind. Des Weiteren wird eine Verkleidung 20 sowohl am Unterboden, an den Seitenbereichen als auch am vorderen und hinteren Bereich des Drehgestells 21 gezeigt. Damit ergibt sich eine aerodynamische Gestaltung des Drehgestells 21. Dies kann aber zu den oben beschriebenen Abwärmeproblemen eines Fahrmotors 1 führen. Erfindungsgemäß ist nunmehr das Kühlsystem derart ausgelegt, dass die Abwärme, insbesondere des Fahrmotors 1 aus dem Drehgestellbereich geführt wird.

FIG 5 zeigt in einer prinzipiellen perspektivischen Darstellung einen Radsatz 24 eines Drehgestells 21, dessen Drehgestellrahmen 23 über eine Feder 19 an einem Träger 18, auch Radsatzlagerschwinge genannt, abgestützt ist und zwischen den Rädern 11 der Fahrmotor 1 angeordnet ist. Sekundärfedern 22 stützen das Drehgestell 21 an einem nicht näher dargestellten Wagenkasten oder Schienenfahrzeugkasten ab.

Schalenförmige Verkleidungselemente sowohl an den Seiten als auch in Fahrtrichtung ebenso wie auf der der Fahrtrichtung abgewandten Seite des Drehgestells 21, bilden die Verkleidung 20. Dabei wird versucht, die Spaltmaße zwischen den einzelnen Verkleidungselementen möglichst gering zu halten, um auch eine funktionsfähige Aerodynamik im ausgedrehten bzw. im nichtausgedrehten Zustand des Drehgestells 21 zu erhalten. Auch ist die Unterseite des Drehgestells 21 verkleidet, weist jedoch nicht näher dargestellte Ausnehmungen für die Räder 11 auf, um den Rad-Schiene-Kontakt herzustellen.

Durch die erfindungsgemäße Ausgestaltung des Fahrmotors 1 als permanenterregte Synchronmaschine mit den beschriebenen Kühlungsarten, insbesondere Wassermantelkühlung und/oder Spaltrohrkühlung des Stators 2 und/oder Innenkühlkreislauf 8, wobei dabei die Verlustwärme außerhalb des Bereichs des Drehgestells 21 geführt wird, ist nunmehr ein voll funktionsfähiges und aerodynamisch gestaltetes Drehgestell 21 geschaffen das vor allem auch für Hochgeschwindigkeitsanwendungen geeignet ist.

Das erfindungsgemäß beschriebene Drehgestell 21 mit einem oder mehreren permanenterregten Synchronmotoren, die als Direktantrieb um die Radsatzwelle 16 angeordnet sind, eine Flüssigkeitskühlung des Stators 2 aufweisen, einen gekapselten Innenkühlkreislauf 8 aufweisen und eine Radsatzlagerung axial innerhalb der Räder 11 aufweisen, ermöglicht somit eine besonders aerodynamische Verkleidung dieses Drehgestells 21.

Grundsätzlich lassen sich auch andere Motortypen als Fahrmotor 1 einsetzen, wie z.B. Asynchronmotoren mit Käfigläufern oder permanenterregte Transversalflussmaschinen als die Radsatzwelle umgreifende Direktantriebe. Ebenso können diese beispielhaften Motortypen achsparallel angeordnet sein und/oder über ein Getriebe mit der Radsatzwelle 16 verbunden sein. Ebenso kann die Radsatzlagerung 15 auch axial außerhalb der Radsatzwelle 16 angeordnet sein. Die Kühlkonzepte müssen demnach ggf. auch eine Flüssigkeitskühlung des Rotors 3 vorsehen. Entscheidend ist dabei immer, dass die Abwärme des Antriebs möglichst gering ist und aus dem vollverkleideten Drehgestellbereich, der aerodynamisch gestaltet sein soll, abgeführt wird.

## Patentansprüche

1. Drehgestell (21) eines Schienenfahrzeugs mit:
- zumindest einem Radsatz (24) mit zwei gegenüberliegenden starr miteinander verbundenen Rädern (11),
- einer Radsatzlagerung (15) des Radsatzes (24) innerhalb der beiden Räder (11),
- einem Fahrmotor (1), der den Radsatz (24) direkt antreibt, wobei der Fahrmotor (1) ein permanenterregter Synchronmotor mit Flüssigkeitskühlung (7) ist,
**gekennzeichnet durch**
- eine aerodynamische Verkleidung (20) des Drehgestells (21), wobei die Verkleidung (20) als eine Vollverkleidung ausgestaltet ist, welche schalenförmige Verkleidungselemente an den Seiten, in den Fahrtrichtungen und an der Unterseite des Drehgestells (21) aufweist, wobei die Verkleidung der Unterseite des Drehgestells (21) Ausnehmungen für die Räder (11) aufweist,
- wobei die Flüssigkeitskühlung (7) als Flüssigkeitskühlmantel ausgeführt ist, und
- wobei der Fahrmotor (1) einen geschlossenen Innenkühlkreislauf (8) aufweist, der am Flüssigkeitsmantel (7) rückkühlbar ist.

2. Drehgestell (21) nach Anspruch 1, **dadurch gek ennzeichnet** , dass der geschlossene Innenkühlkreislauf (8) an einem Spaltrohr(28) eines Stators (2) des Fahrmotors (1) rückkühlbar ist.

3. Drehgestell (21) nach Anspruch 2, **dadurch ge-k ennzeichnet**, dass die Flüssigkeitsmantelkühlung (7) zwischen der Rückseite eines Stators (2) des Fahrmotors (1) und den, insbesondere außenliegenden Luftführungskanälen des Innenkühlkreislaufes (8) angeordnet ist.

4. Drehgestell (21) nach Anspruch 2, **dadurch ge-k ennzeichnet**, dass der Stator (2) des Fahrmotors (1) durch ein Spaltrohr (28) von einem Rotor (3) des Fahrmotors (1) getrennt ist, so dass der Stator (2) mittels einer isolierenden Flüssigkeit kühlbar ist.

5. Schienenfahrzeug, insbesondere Hochgeschwindigkeitszug mit zumindest einem Drehgestell (21) nach einem der vorhergehenden Ansprüche, wobei zumindest eine Rückkühlungseinheit der Flüssigkeitskühlung (7) in und/oder an dem Schienenfahrzeug angeordnet ist.

## Claims

1. Bogie (21) of a rail vehicle with:
- at least one wheelset (24) with two opposing rigidly interconnected wheels (11),
- a wheelset bearing (15) of the wheelset (24) within the two wheels (11),
- a traction motor (1), which drives the wheelset (24) directly, wherein the traction motor (1) is a permanently excited synchronous motor with liquid cooling (7), **characterised by**
- an aerodynamic enclosure (20) of the bogie (21), wherein the enclosure (20) is formed as a full enclosure, which has shell-shaped enclosure elements on the sides, in the directions of travel and on the underside of the bogie (21), wherein the enclosure of the underside of the bogie (21) has recesses for the wheels (11),
- wherein the liquid cooling (7) is designed as a liquid cooling jacket, and
- wherein the traction motor (1) has a closed internal cooling circuit (8), which can be recooled at the liquid cooling jacket (7).

2. Bogie (21) according to claim 1, **characterised in that** the closed internal cooling circuit (8) can be recooled at a motor can (28) of a stator (2) of the traction motor (1).

3. Bogie (21) according to claim 2, **characterised in that** the liquid jacket cooling (7) is arranged between the rear side of a stator (2) of the traction motor (1) and the in particular external air-guiding ducts of the internal cooling circuit (8).

4. Bogie (21) according to claim 2, **characterised in that** the stator (2) of the traction motor (1) is separated from a rotor (3) of the traction motor (1) by a motor can (28), so that the stator (2) can be cooled by means of an insulating liquid.

5. Rail vehicle, in particular high-speed train, with at least one bogie (21) according to one of the preceding claims, wherein at least one recooling unit of the liquid cooling (7) is arranged in and/or on the rail vehicle.

## Revendications

1. Bogie (21) d'un véhicule ferroviaire comprenant :
- au moins un essieu (24) ayant deux roues (11) reliées entre elles rigidement en se faisant face,
- une boîte (15) de l'essieu (24) à l'intérieur des deux roues (11),
- un moteur (1) de traction, qui entraîne directement l'essieu (24), dans lequel le moteur (1) de traction est un moteur synchrone à excitation permanente ayant un refroidissement (7) par du liquide,
**caractérisé par**
- un habillage (20) aérodynamique du bogie (21), dans lequel l'habillage (20) est conformé en habillage complet, qui a des éléments d'habillage en forme de coque sur les côtés dans les directions de déplacement et sur le côté inférieur du bogie (21), dans lequel l'habillage du côté inférieur du bogie (21) a des évidements pour les roues (11),
- dans lequel le refroidissement (7) par du liquide est réalisé sous la forme d'une enveloppe de refroidissement par du liquide et
- dans lequel le moteur (1) de traction a un circuit (8) fermé de refroidissement interne, qui peut, à l'enveloppe (7), être refroidi en retour.

2. Bogie (21) suivant la revendication 1, **caractérisé en ce que** le circuit (8) de refroidissement intérieur fermé peut être refroidi en retour à une gaine (28) d'un stator (2) du moteur (1) de traction.

3. Bogie (21) suivant la revendication 2, **caractérisé en ce que** le refroidissement (7) par enveloppe par du liquide est disposé entre le côté arrière d'un stator (2) du moteur (1) de traction et les canaux de conduite d'air, se trouvant en particulier à l'extérieur, du circuit (8) de refroidissement intérieur.

4. Bogie (21) suivant la revendication 2, **caractérisé en ce que** le stator (2) du moteur (1) de traction est séparé d'un rotor (3) du moteur (1) de traction par une gaine (28), de manière à ce que le stator (2) puisse être refroidi au moyen d'un liquide isolant.

5. Véhicule ferroviaire, en particulier train à grande vitesse, comprenant au moins un bogie (21) suivant l'une des revendications précédentes, dans lequel au moins une unité de refroidissement en retour du refroidissement (7) par liquide est disposé dans et/ou sur le véhicule ferroviaire.
